# EUROPÄISCHE PATENTSCHRIFT

(11) **EP 1 495 824 B1**
(45) Veröffentlichungstag und Bekanntmachung des Hinweises auf die Patenterteilung: **15.09.2010**
(21) Anmeldenummer: 04013615.2
(22) Anmeldetag: 09.06.2004
(51) Int. Cl.: B23F 19/10

(54) **Verfahren und Vorrichtung zur Herstellung eines Zahnrades und Entgratwerkzeug zum Entgraten eines Zahnradrohlings**
Process and device for the production of a gear wheel and deburring tool for deburring a gear wheel blank
Procédé et dispositif de fabrication d'un engrenage et outil d' ébavurage pour un engrenage brut de fabrication

(30) Priorität: 05.07.2003 DE 10330474
(43) Veröffentlichungstag der Anmeldung: 12.01.2005
(73) Patentinhaber: Fette GmbH, 21493 Schwarzenbek (DE)
(72) Erfinder: Wolff, Alfred, 21514 Büchen (DE); Thiesies, Siegfried, 21493 Schwarzenbek (DE); Carmincke, Wolfgang, 21379 Scharnebeck (DE)
(74) Vertreter: Hauck Patent- und Rechtsanwälte

(56) Entgegenhaltungen:
- US-A- 2 597 129
- PATENT ABSTRACTS OF JAPAN Bd. 009, Nr. 042 (M-359), 22. Februar 1985 (1985-02-22) -& JP 59 182020 A (TOKICO KK), 16. Oktober 1984 (1984-10-16)

## Beschreibung

Die Erfindung bezieht sich auf ein Verfahren zur Herstellung eines Zahnrads nach dem Patentanspruch 1, eine Vorrichtung zur Herstellung eines Zahnrads nach dem Patentanspruch 4 und ein Entgratwerkzeug zum Entgraten eines Zahnradrohlings nach Patentanspruch 8.

Es ist bekannt, Zahnräder mit Hilfe von sogenannter Wälzfräsern zu erzeugen. Wälzfräser haben als geometrischen Ausgangskörper eine Schnecke. Wird diese mit Spannuten versehen, erhält man Fräszähne, die durch das sogenannte Hinterarbeiten schnittfähig werden. Nach dem Verzahnen zahnradartiger Werkstücke sind die Stirnkanten der Zahnnuten und der Zahnköpfe scharfkantig, insbesondere an der Seite, an der das Fräswerkzeug austritt. Es ist bekannt, das Entfernen der Grate in Handarbeit durchzuführen. Es ist ferner bekannt, das Entgraten durch Schleifen, Formfräsen oder mittels Druckrollen vorzunehmen.

Aus DE 199 02 035 ist ein Verfahren zum Entgraten der Stirnkanten der Zahnnuten zahnradartiger Werkstücke bekannt geworden, bei dem die Werkzeugdrehachse mit einem festen radialen Abstand zur Wcrkstückdrchachse und einem festen Axialabstand zur Werkstückstimseite in konstantem Drehzahlverhältnis zum kontinuierlich drehangetriebenen Werkstück betrieben wird, wobei eine auf der Werkzeugachse sitzende Messerplatte Schneiden ausbildet zum Anfasen der Nutenfußkante mit einem vorbestimmten Fußfasenwinkel, Anfasen einer ersten Nutenflankenkante mit einem vorbestimmten Flankenfasenwinkel und Anfasen einer zweiten, der ersten gegenüberliegenden Nutflankenkante mit einem vorbestimmten Flankcnfasenwinkel. Hierbei erfolgt das Anfasen nicht kontinuierlich, sondern diskontinuierlich im Einzelteilverfahren.

Gemeinsam ist diesen; bekannten Vorrichtungen, daß sie auf einer von der Wälzfräsmaschine getrennten Vorrichtung bearbeitet werden. Der Herstellungsprozeß eines Zahnrads ist normalerweise derart, daß zunächst ein Rohling gedreht wird, der anschließend in einer Werkzeugmaschine mit einem Wälzfräswerkzeug bearbeitet wird. Nach dem Wälzfräsen erfolgt das Entgraten in einer separaten Vorrichtung und danach zur Feinbearbeitung das Schaben, das wiederum in der gleichen Werkzeugmaschine vor sich gehen kann, indem der Wälzfräsprozeß durchgeführt wird.

Die bekannten Verfahren weisen erhebliche Nachteile auf. Eine separate Vorrichtung zum Entgraten erhöht naturgemäß den apparativen Aufwand. Fertigungsaufwand entsteht durch das Umsetzen des gefrästen Rohzahnrads in die Entgratvorrichtung, was eine gewisse Transport- und Umrüstzeit in Anspruch nimmt. Nachteilig bei dem bekannten Verfahren ist ferner, daß sie eine relativ große Durchlaufzeit haben.

Aus Patent Abstracts of Japan JP 59182020A ist bekannt geworden, bei der Herstellung eines Zahnradrohlings einen Wälzfräser zum Formen des Zahnrades auf einer Welle mit einem Entgrat-Wälzfräser anzuordnen. Die beiden Bearbeitungsvorgänge erfolgen zahnweise oder zahngruppenweise nacheinander, bis der komplette Umfang des Zahnrads fertig bearbeitet ist.

Aus US-A-2,597,129 ist ein Werkzeug ähnlich einem Scheibenfräser bekannt geworden, das zwei Gänge aufweist und pro Gang eine Vielzahl von Zähnen. Beim Bearbeiten kommen die Zähne eines Ganges nacheinander mit einem Zahn bzw. einer Zahnlücke des Zahnrades in Eingriff und erzeugen eine Anschrägung in einem Stirnbereich der Zähne.

Der Erfindung liegt die Aufgabe zugrunde, das Entgraten eines Zahnradrohlings mit einem deutlich geringeren Fertigungs- und apparativen Aufwand durchzuführen.

Diese Aufgabe wird durch die Merkmale der Patentansprüche 1, 4 und 8 gelöst.

Bei dem erfindungsgemäßen Verfahren erfolgt das Entgraten am unverändert in der Werkzeugmaschine aufgespannten Rohzahnrad im kontinuierlichen Durchlauf mit Hilfe eines einem Scheibenfräser ähnlichen, Schneidzähne aufweisenden Entgratwerkzeugs, das drehfest auf der Welle des Wälzfräsers angeordnet wird. Das Entgratwerkzeug weist pro Gang einen Zahn auf, wodurch bei der synchronisierten Drehbewegung von Entgratwerkzeug und Zahnrad jeweils ein Zahn mit einer Zahnlücke des Zahnrads zusammenwirkt. Die Werkzeugwelle ist bekanntlich im Raum verstellbar. Nach dem Wälzfräsprozeß wird die Werkzeugwelle so eingestellt, daß das Entgratwerkzeug durch Drehung mit der Welle nunmehr mit den Stirnkanten der Zahnnuten in Eingriff gebracht werden kann, um nach Art des Wälzfräsverfahrens nacheinander die Stirnkanten der Zahnnuten zu bearbeiten.

Das erfindungsgemäß Verfahren weist erhebliche Vorteile auf. Zum Entgraten wird zwar ein separates Entgratwerkzeug benötigt, dieses wird jedoch in der gleichen Werkzeugmaschine eingesetzt, in der auch das Wälzfräsverfahren durchgeführt wird. Damit ist der apparative Aufwand gegenüber herkömmlichen Verfahren drastisch reduziert. Auch der Fertigungsaufwand wird erheblich verringert. Transportzeiten, Einrichtzeiten und Umrüstzeiten für den Entgratprozeß nach dem Ende des Wälzfräsprozesses entfallen weitgehend. Dadurch wird erheblich Fertigungszeit eingespart. Da das Entgraten im Durchlauf kontinuierlich erfolgt, ist die Durchlaufzeit für das Entgraten eines Zahnrads deutlich geringer als bei herkömmlichen Verfahren, wobei wie erwähnt pro Zahn nur ein Entgratzahn des Entgratzahns benötigt wird. Das Entgraten erfolgt daher in kürzestmöglicher Zeit.

Es ist auch nicht erforderlich, zum Entgraten des Zahnrads auf beiden Seiten das Werkstück umzusetzen, vielmehr kann nach einer Ausgestaltung der Erfindung das Rohzahnrad in seiner Position eingespannt bleiben, indem zunächst die Stirnkanten auf einer Seite des Rohzahnrads bearbeitet werden und anschließend die Stirnkanten auf der gegenüberliegenden Seite. In einem Fall wird das Entgratwerkzeug auf die Stirnkanten zu und im anderen Fall von den Zahnnuten aus von den Stirnkanten fort bewegt.

Mit dem erfindungsgemäßen Verfahren ist auch möglich, das Anfasen in zwei oder mehr Schritten vorzunehmen, indem das Entgratwerkzeug vor jedem Durchlauf um einen vorgegebenen Betrag zugestellt wird. Dadurch kann die Größe der Fase nahezu beliebig gewählt werden.

Die erfindungsgemäße Vorrichtung nach Patentanspruch 4 sieht Mittel zum Aufspannen und drehenden Antreiben eines Zahnrohlings und einer drehend im Raum verstellbaren Werkzeugwelle vor. Diese sind ähnlich einem Scheibenfräser ausgeführt mit in gleichen Umfangsabständen angeordneten Schneidzähnen und Spannuten mit einem schraubenförmigen Verlauf, wobei die Anordnung der Schneidzähne mehrgängig ist mit jeweils einem Zahn pro Gang. Nach einer Ausgestaltung der Erfindung ist das Entgratwerkzeug ein getrenntes Werkzeug, das separat auf der Werkzeugwelle drehfest angeordnet wird. Alternativ kann es auch in Drehverbindung mit dem Wälzfräswerkzeug gebracht werden, beispielsweise durch Klauen, die an den aneinander zugekehrten Enden von Wälzfräs- und Entgratwerkzeug geformt sind. Schließlich kann nach einer anderen Ausgestaltung der Erfindung das Entgratwerkzeug auch einteilig mit dem Wälzfräser ausgebildet sein.

Das Entgratwerkzeug nach Patentanspruch 8 ist einem Scheibenfräser ähnlich und weist am Umfang in gleichen Umfangsabständen Schneidzähne und Spannuten auf. Die Schneidzähne haben in Umfangsrichtung schraubenlinienförmigen Verlauf. Die an der in Drehrichtung vorderen Seite der Zähne ausgebildeten Schneidkanten liegen auf einem gemeinsamen Flugkreis. Das Entgratwerkzeug ist mehrgängig, wobei pro Gang ein Zahn vorgesehen ist.

Da auch die Stirnkanten der Zahnköpfe unter Umständen angefast werden müssen, sieht eine Ausgestaltung der Erfindung vor, daß neben den Zähnen Schneiden vorgesehen sind zum Anfasen der Stirnkanten der Zahnköpfe des Zahnrades.

Bei einem gradverzahnten Zahnrad ist das Profil der Schneidkanten der Schneidzähne symmetrisch zur Mittenebene des Entgratwerkzeugs. Beim schräg verzahnten Zahnrad ist es entgegen unsymmetrisch.

Das erfindungsgemäße Entgratwerkzeug hat den weiteren Vorteil, daß es auf der Werkzeugmaschine nachgeschliffen werden kann. Dadurch entsteht zwar ein gewisser Abtrag, aber das erforderliche Profil bleibt unverändert.

Das erfindungsgemäße Zahnrad gleicht einem Scheibenfräser, bei dem jedoch die schraubenlinienförmig verlaufenden Zähne so angeordnet sind, daß gleiche Punkte aller Zähne auf dem gleichen Flugkreis liegen. Dies im Gegensatz zum Scheibenfräser als Verzahnungswerkzeug.

Die Erfindung wird nachfolgend anhand eines in Zeichnungen dargestellten Ausführungsbeispiels näher erläutert.
- Fig. 1: zeigt äußerst schematisch eine Wälzfräs- und Entgratvorrichtung nach der Erfindung.
- Fig. 2: zeigt das Bezugsprofil im Normalschnitt eines Schneidzahns eines Entgrat- werkzeugs nach Fig. 1.
- Fig. 3: zeigt perspektivisch die Anordnung eines Zahnrads und eines Entgratwerk- zeugs nach der Erfindung während des Entgratvorgangs.
- Fig. 4: zeigt perspektivisch vergrößert einen Teil der Ansicht nach Fig. 3.
- Fig. 5: zeigt ebenfalls einen Teil von Fig. 3, jedoch von schräg oben betrachtet.

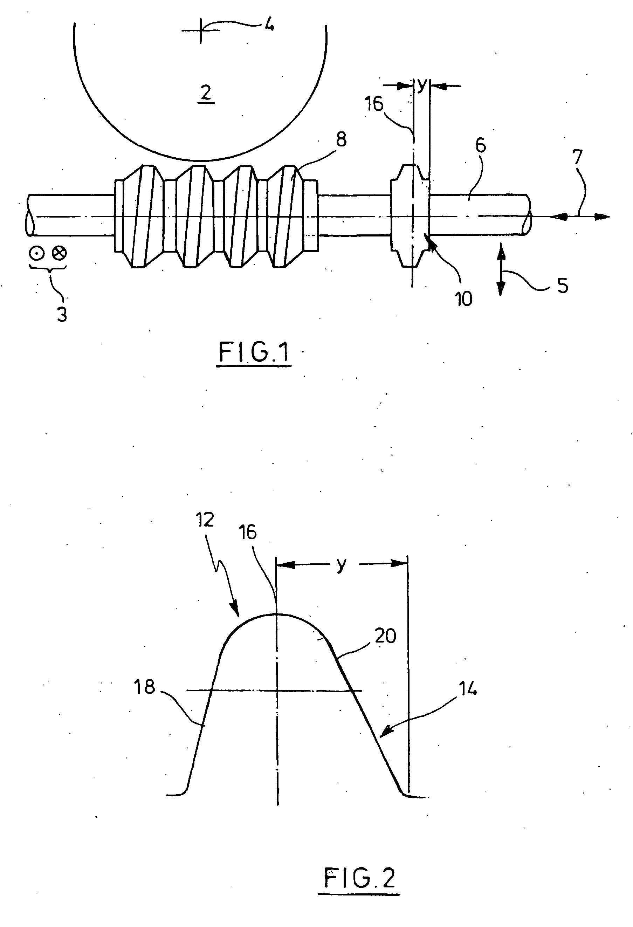

In Fig. 1 ist bei 2 ein Zahnradrohling angedeutet, der in einer weiter nicht gezeigten Werkzeugmaschine eingespannt und drehend um eine Achse 4 angetrieben ist. Die Achse steht z. B. senkrecht zur Zeichenebene. Auf einer Welle 6 der Werkzeugmaschine ist ein Wälzfräswerkzeug 8 aufgespannt. Die Welle 6 kann, wie durch den Doppelpfeil 7, dem Doppelpfeil 5 und bei 3 angedeuteten Richtungen im Raum verstellt werden. Durch Drehung der Werkzeugwelle 6 und durch die richtige Anstellung sowie durch die richtige Zustellung und Vorschub wird ein Stirnzahnrad erzeugt. Dieses Verfahren ist allgemein bekannt und soll im einzelnen nicht erörtert werden.

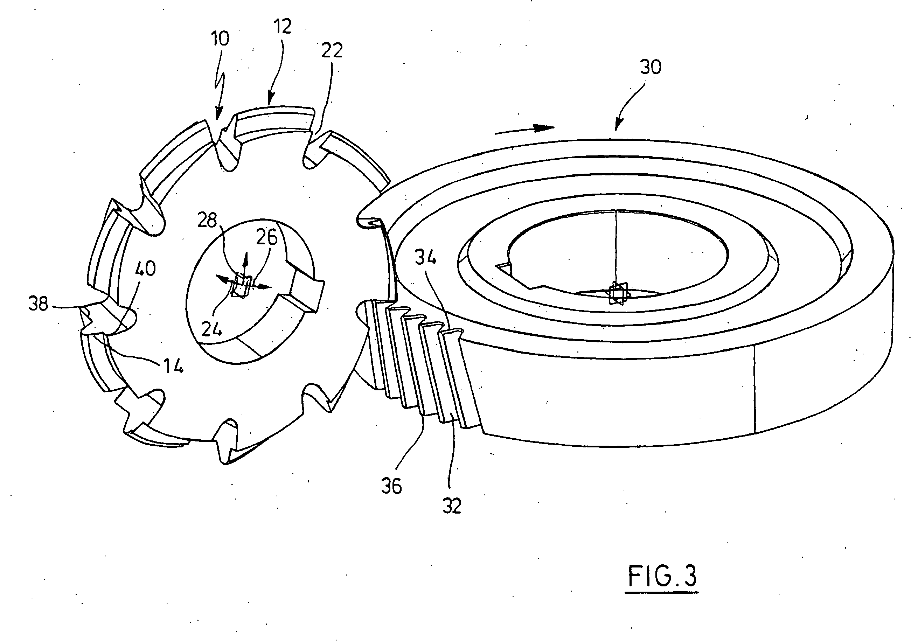

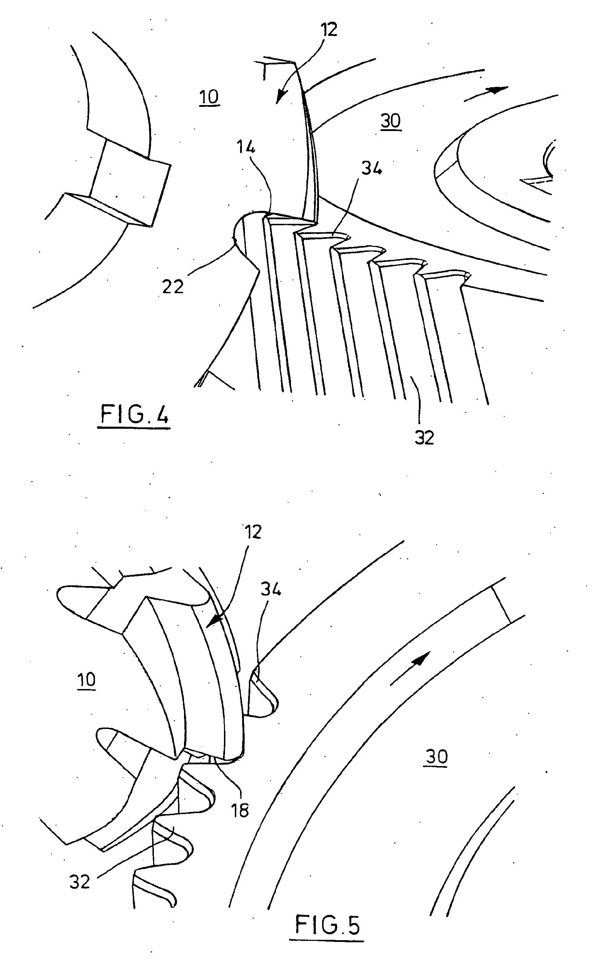

Auf der Welle 6 ist ein Entgratwerkzeug 10 aufgespannt. Es dient zum Entgraten der Stirnkanten der Zahnnuten des zuvor hergestellten Zahnrads, worauf unter Bezug der weiteren Fign. 3 bis 5 näher eingegangen wird.

Das scheibenförmige Entgratwerkzeug 10 ist in Fig. 3 in perspektivischer Darstellung wiedergegeben. Jeder Zahn 12 liegt auf einer Schraubenlinie. Zwischen den Zähnen 12 liegen Spannuten 22 von V-förmiger Kontur mit gerundetem Grund. Wenn das Entgratwerkzeug 10 sich dreht, bilden die Kanten der Vorderseiten der Zähne 12 jeweils Schneidkanten 14. Die Besonderheit bei einem einem Scheibenfräser ähnlichen Entgratwerkzeug ist die, daß jeder Zahn 12 auf einem eigenen Gang angeordnet ist. Da neun Zähne 12 im gleichmäßigen Umfangsabstand vorgesehen sind, ist das Entgratwerkzeug 10 neungängig. Die weitere Besonderheit ist die, daß die Schneidkanten 14 bzw. vorgegebene Punkte der Zähne 12 auf einem gemeinsamen Flugkreis angeordnet sind.

In Fig. 3 sind auch die drei Achsen angedeutet, entlang denen das Entgratwerkzeug 10 mit Hilfe der in Fig. 1 gezeigten Werkzeugwelle 6 bewegt werden kann. Entlang der Achsen 26, 28 erfolgt die Zustellung bezüglich eines Zahnrads 30, das mit einer Schrägverzahnung 32 versehen ist und bei dem die Stirnkanten der Zahnnuten bereits als angefast oder entgratet gezeigt sind. Diese Fase ist in Fig. 3 bei 34 angedeutet. Das Zahnrad 30 nach Fig. 3 dreht sich wie das Entgratwerkzeug 10 im Uhrzeigersinn.

Nach dem Wälzfräsprozeß gemäß Fig. 1 wird die Werkzeugwelle 6 so verstellt, daß das Entgratwerkzeug 10 in eine Position gebracht wird, wie dies in Fig. 3 wiedergegeben ist. Während der Bearbeitung der Stirnkanten der Zahnnuten drehen Zahnrad 30 und Entgratwerkzeug 10 in einem vorgegebenen Drehzahlverhältnis, so daß jeweils ein Zahn 12 die Stirnkanten einer Zahnnut bearbeitet. Es versteht sich, daß das Entgratwerkzeug 10 bzw. die Zähne 12 entsprechend den Parametern der Verzahnung des Zahnrads 30 ausgelegt sind, damit der gewünschte Eingriff mit den Stirnkanten der Zahnnuten erfolgen kann.

Bei der Darstellung nach Fig. 3 wird zunächst eine Bearbeitung der Stirnkanten auf der nach oben zeigenden Seite des Zahnrads 30 vorgenommen. Soll auch auf der gegenüberliegenden unteren Seite ein Anfasen der Stirnkanten erfolgen, wird hier keineswegs das Zahnrad 30 um 180° verdreht eingespannt, sondern es verbleibt in der gezeigten Lage. Zur Bearbeitung ist lediglich erforderlich, daß das Entgratwerkzeug 10 in Richtung der Achse 28 nach unten relativ zum Zahnrad 30 bewegt wird, so daß beim Entgraten die Zähne 12 von den Nuten 32 aus nach außen (in Fig. 3 nach unten) bewegt werden, um an dieser Stelle ebenfalls eine Fase zu erzeugen. Soll an den Zahnköpfen 36 eine Fase angebracht werden, kann dies mit Hilfe von Schneidkanten 38 bzw. 40 erfolgen, die beidseits der Schneidkante 14 angeordnet sind.

Es ist denkbar, statt wie in den Fign. 3 bis 5 gezeigt, pro Gang zwei oder mehr Zähne vorzusehen. Bei der Bearbeitung kommen dann sämtliche Zähne eines Gangs mit der Stirnkante einer Zahnnut nacheinander in Eingriff.

Fig. 2 zeigt das Bezugsprofil eines Zahns 12 im Normalschnitt. Man erkennt, daß bezüglich der Achse 16, die durch die Mittenebene geht, das Profil nicht symmetrisch ist, sondern eine steilere Flanke 18 und eine flachere Flanke 20 aufweist. Auch der Scheitelbereich ist nicht symmetrisch. Zur steileren Flanke 18 gehört ein kleinerer Radius als zur flacheren Flanke 20. Ein derartiges Profil wird für ein schräg verzahntes Zahnrad benötigt. Wird hingegen ein gratverzahntes Zahnrad zu entgraten sein, kann ein symmetrisches Profil zur Anwendung gelangen.

## Patentansprüche

1. Verfahren zur Herstellung eines Zahnrades aus einem Gahnradrohling, bei dem der in einer Werkzeugmaschine eingespannte, drehend angetriebne Zahnradrohling (2) mit einem auf einer drehend angetriebenen Werkzeugwelle(6) angeordneten Wälzfräser (8) bearbeitet und das erstellte Rohzahnrad(30) anschließend mittels eines drehend angetriebenenEngratwerkzeugs (10) entgratet wird, indem die Stirnkanten der Zahnnuten (32) angefast werden, wobei die Drehzahl von Entgratwerkzeug(10) und Rohzahnrad (30) ein konstantes Verhältnis aufweisen, wobei das Entgraten mit Hilfe des Entgratwerkzeugs am unverändert in der Werkzeugmaschine aufgespannten Rohzahnrad (30) im kontinuierlichen Durchlauf erfolgt, wobei das Entratwerkzeug drehfest auf der Welle (6) des Wälzfräsers (8) angeordnet wird und wobei nach Art des Wälzfräsverfahrens nacheinander die Stirnkanten der Zahnnuten bearbeitet werden und die Welle (6) aus der Wälzfräseinstellung in eine Entgrateinstellung bewegt wird, **dadurch gekennzeichnet, dass** das Entgraten mit einem einem Scheibenfräser ähnlichen Entgratwerkzeug (10) durchgeführt wird, das am Umfang in gleichen Umfangsabständen Schneidzähne (12) und Spannuten (22) mit einem schraubenförmigen Verlauf aufweist, wobei die Anordnung der Schneidzähne (12) mehrgängig ist mit jeweils einem Zahn (12) pro Gang.

2. Verfahren nach Anspruch 1, **dadurch gekennzeichnet, daß** das Entgraten der Stirnkanten auf einer Seite des Rohzahnrads durch Zustellen des Entgratwerkzeugs gegen diese Seite des Rohzahnrads und das Entgraten der Stirnkanten der Zahnnuten auf der gegenüberliegenden Seite des Rohzahnrads in einer zweiten Entgrateinstellung durch Zustellen des Entgratwerkzeugs von den Zahnnuten aus nach außen von der anderen Seite fort erfolgt.

3. Verfahren nach Anspruch 1 oder 2, **dadurch gekennzeichnet, daß** das Anfasen in zwei oder mehr Durchläufen erfolgt, wobei das Entgratwerkzeug vor jedem Durchlauf um einen vorgegebenen Betrag zugestellt wird.

4. Vorrichtung zur Herstellung eines Zahnrades aus einem Zahnradrohling mit einer Werkzeugmaschine, die Mittel aufweist zum Aufspannen und drehenden Antreiben eines Zahnradrohlings (30) und einer drehend angetriebenen und im Raum verstellbaren Werkzeugwelle (6), auf der ein Wälzfräser (8) und ein Entgratwerkzeug (10) drehfest angebracht sind, **dadurch gekennzeichnet, dass** das Entgratwerkzeug (14) ähnlich einem Seheibenfräser ausgeführt ist mit in gleichen Umfangsabständen angeordneten Schneidzähnen (12) und Spannuten (22) mit einem schraubenförmigen Verlauf, wobei die Anordnung der Schneidezähne (12) mehrgängig ist mit jeweils einem Zahn (12) pro Gang.

5. Vorrichtung nach Anspruch 4, **dadurch gekennzeichnet, daß** ein getrenntes Entgratwerkzeug (10) auf der Werkzeugwelle (6) angeordnet ist.

6. Vorrichtung nach Anspruch 5, **dadurch gekennzeichnet, daß** zwischen dem Wälzfräser und dem Entgratwerkzeug an den aneinander zugekehrten Stirnseiten eine Drehverbindung gebildet ist.

7. Vorrichtung nach Anspruch 4, **dadurch gekennzeichnet, daß** das Entgratwerkzeug einteilig mit dem Wälzfräser ausgebildet ist.

8. Entgratwerkzeug zum Entgraten eines Zahnradrohlings, das ähnlich einem Scheibenfräser geformt ist mit in gleichen Umfangsabständen angeordneten Schneidzähnen (12) und Spannuten (22), die einen schraubenlinienförmigen Verlauf aufweisen und mehrgängig angeordnet sind, **dadurch gekennzeichnet, dass** jeweils pro Gang ein Zahn (12) vorgesehen ist, wobei die in Drehrichtung an der vorderen Seite der Zähne (12) gebildeten Schneidkanten (14) auf einem gemeinsamen Flugkreis angeordnet sind.

9. Entgratwerkzeug nach Anspruch 8, **dadurch gekennzeichnet, daß** neben der Schneidkante (14) der Zähne (12) mindestens eine weitere Schneidkante (14) vorgesehen ist zum Anfasen der Stirnkante der Zahnköpfe des Zahnrads (30).

10. Entgratwerkzeug nach Anspruch 8 oder 9, **dadurch gekennzeichnet, daß** das Profil der Schneidkanten (14) bezogen auf die Mittenebene (16) des Entgratwerkzeugs (10) unsymmetrisch ist.

## Claims

1. A method for the manufacture of a toothed gear from a gear blank wherein the gear blank (2) loaded into a machine tool and rotationally driven is machined by a hobbing cutter (8) disposed on a rotationally driven tool shaft (6) and the rough-hobbed gear (30), once produced, is subsequently cleared of burr by means of a rotationally driven deburring tool (10) by causing it to chamfer the front-end edges of the inter-teeth grooves (32), wherein the number of revolutions of said deburring tool (10) and rough-machined gear (30) has a constant ratio, wherein the removal of burr is performed on said rough-machined gear invariably loaded on said machine tool in a continuous pass by using the deburring tool, the deburring tool (10) being mounted to the tool shaft (6) of the hobbing cutter (8) in a rotatably fixed manner and wherein the front-end edges of the inter-teeth grooves are successively machined in the way of a gear hobbing process, and said shaft is changed from the gear hobbing setting over to a burr removal setting, **characterized in that** the removal of burr is performed by a deburring tool (10) which is similar to a side milling cutter and which, at the circumference, comprises cutting teeth (12) and clamping grooves (22) in a helical peripheral run at equal circumferential spacings, the arrangement of the cutting teeth (12) being multiple threaded with one tooth (12) per lead.

2. The method of claim 1, **characterized in that** the removal of burr from said front-end edges is performed on one side of said rough-machined gear by advancing said deburring tool against this side of said rough-machined gear and the removal of burr from said front-end edges of said inter-teeth grooves on the opposite side of said rough-machined gear is performed in a second burr removal setting by advancing said deburring tool outwardly from said inter-teeth grooves away from the other side.

3. The method according to claim 1 or 2, **characterized in that** chamfering is performed in two or more passes, said deburring tool being advanced by a predetermined amount prior to each pass.

4. A device for the manufacture of a toothed gear from a gear blank on a machine tool which has means for loading and rotationally driving a gear blank (30) and a rotationally driven tool shaft (6) adjustable in space on which a hobbing cutter (8) and a deburring tool (10) are mounted in a rotatably fixed manner, **characterized in that** the deburring tool (10) is implemented like a side milling cutter having cutting teeth (12) and clamping grooves (22) in a helical peripheral run at equal circumferential spacings, the arrangement of the cutting teeth (12) being multiple threaded with one tooth (12) per lead.

5. The device according to claim 4, **characterized in that** a separate deburring tool (10) is disposed on said tool shaft (6).

6. The device according to claim 5, **characterized in that** a rotary connection is defined between said hobbing cutter and said deburring tool at the front ends facing each other.

7. The device according to claim 4, **characterized in that** said deburring tool is formed integrally with said hobbing cutter.

8. A deburring tool for the removal of burr from a gear blank which is formed like a side milling cutter having cutting teeth (12) and clamping grooves (22) in a helical peripheral run at equal circumferential spacings, which are disposed in multiple leads, **characterized in that** one tooth (12) per lead is provided, the cutting edges (14) formed at the side which is the front side of the teeth (12) in a rotational direction being disposed on a common fly circle.

9. The deburring tool according to claim 8, **characterized in that** at least one more cutting edge (14) is provided next to the cutting edge (14) of the teeth (12) to chamfer the front-end edges of the tooth heads of the toothed gear (30).

10. The deburring tool according to claim 8 or 9, **characterized in that** the profile of the cutting edges (14) is asymmetric, based on the central plane (16) of the deburring tool (10).

## Revendications

1. Procédé de fabrication d'un engrenage à partir d'un engrenage brut de fabrication, dans lequel l'engrenage brut de fabrication (2), serré dans une machine-outil et à entraînement rotatif, est usiné par une fraise-mère développante (8) disposée dans un arbre d'outil (6) à entraînement rotatif, et l'engrenage brut (30) ainsi produit est alors ébavuré à l'aide d'un outil d'ébavurage (10) à entraînement rotatif en chanfreinant les arêtes de front des rainures des dents (32), la vitesse de rotation de l'outil d'ébavurage (10) et de l'engrenage brut (30) étant dans une proportion constante en cela, l'ébavurage à l'aide de l'outil d'ébavurage se faisant en passe continue dans l'engrenage brut (30) qui reste serré dans la machine-outil de façon inaltérée, l'outil d'ébavurage étant disposé sur l'arbre (6) de la fraise-mère développante (8) de façon bloquée contre la rotation, et les arêtes de front des rainures des dents étant usinées consécutivement à la manière du procédé fraise-mère développante et l'arbre (6) étant tourné de l'ajustage fraise-mère développante à un ajustage d'ébavurage, **caractérisé en ce que** l'ébavurage est fait par un outil d'ébavurage (10) semblable à une fraise disque, qui présente dans sa périphérie des dents coupants (12) et des rainures à coupeaux (22) en écarts périphériques égaux en un cours hélicoïdal, l'arrangement des dents coupants (12) étant à filetage multiple avec un dent (12) par chaque spire.

2. Procédé selon la revendication 1, **caractérisé en ce que** l'ébavurage des arêtes de front dans un côté de l'engrenage brut se fait par avancement de l'outil d'ébavurage contre ce côté de l'engrenage brut, et l'ébavurage des arêtes de front des rainures des dents sur le côté opposé de l'engrenage brut est fait dans un deuxième ajustage d'ébavurage en avançant l'outil d'ébavurage vers l'extérieur à partir des rainures des dents, au loin de l'autre côté.

3. Procédé selon la revendication 1 ou 2, **caractérisé en ce que** le chanfreinage se fait en deux ou plus passes, l'outil d'ébavurage étant avancé avant chaque passe pour un montant prédéterminé.

4. Dispositif de fabrication d'un engrenage. à partir d'un engrenage brut de fabrication par une machine-outil qui présente des moyens pour serrer et entraîner de façon rotative un engrenage brut (30) et un arbre d'outil (6) entraîné de façon rotative et ajustable dans l'espace, sur lequel une fraise-mère développante (8) et un outil d'ébavurage (10) sont montés de façon bloquée contre la rotation, **caractérisé en ce que** l'outil d'ébavurage (10) est réalisé semblable à une fraise disque, avec des dents coupants (12) et des rainures à coupeaux (22) en écarts périphériques égaux en un cours hélicoïdal, l'arrangement des dents coupants (12) étant à filetage multiple avec un dent (12) par chaque spire.

5. Dispositif selon la revendication 4, **caractérisé en ce que** un outil d'ébavurage (10) séparé est arrangé dans l'arbre d'outil (6).

6. Dispositif selon la revendication 5, **caractérisé en ce que** un joint tournant est formé entre la fraise-mère développante et l'outil d'ébavurage sur les côtés de front faisant face l'un à l'autre.

7. Dispositif selon la revendication 4, **caractérisé en ce que** l'outil d'ébavurage est formé en une seule pièce avec la fraise-mère développante.

8. Outil d'ébavurage pour ébavurer un engrenage brut de fabrication, qui est formé semblable à une fraise disque avec des dents coupants (12) et des rainures à coupeaux (22) en écarts périphériques égaux qui ont un cours hélicoïdal et sont arrangés à filetage multiple, **caractérisé en ce que** un dent (12) est pourvu par chaque spire, les arêtes coupantes (14) formées sur le côté de front des dents (12) dans le sens de rotation étant arrangées dans un orbite commun.

9. Outil d'ébavurage selon la revendication 8, **caractérisé en ce que** au moins une autre arête coupante (14) est pourvue outre de l'arête coupante (14) des dents (12), afin de chanfreiner l'arête de front des têtes des dents de l'engrenage (30).

10. Outil d'ébavurage selon la revendication 8 ou 9, **caractérisé en ce que** le profil des arêtes coupantes (14) est asymétrique par rapport au plan central (16) de l'outil d'ébavurage (10).
